# EUROPEAN PATENT APPLICATION

(11) **EP 4 641 277 A1**
(43) Date of publication of application: **29.10.2025**
(21) Application number: 24221102.7
(22) Date of filing: 18.12.2024
(51) Int. Cl.: G02B 6/44

(54) **COMPRESSION SEALING MECHANISM ON FIBER OPTIC TERMINALS**

(30) Priority: 24.04.2024 US 202463638005 P
(71) Applicant: Corning Research & Development Corporation, Corning, New York 14831 (US)
(72) Inventor: GAUDYNSKA, Marta Eliza, 93-142 Lodz (PL); ORLOWSKI, Karol Pawel, 92-701 Moskwa (PL)
(74) Representative: Reddie & Grose LLP

(57) **Abstract**

The present disclosure relates to a sealing system that includes compressible members that are compressed onto cables to create a seal for a terminal where compressible members compress independently of each other when cable(s) are inserted into the compressible member(s).

## Description

### FIELD

This application claims the benefit of priority of U.S. Provisional Application No. 63/638,005, filed on April 24, 2024, the content of which is relied upon and incorporated herein by reference in its entirety.

### FIELD

The present disclosure relates to fiber optic terminal components and more particularly, to a sealing system for fiber optic terminals.

### BACKGROUND

Cables (such as used to carry communication fiber) are often routed in and out of communications equipment cabinets and other enclosures in order to connect with various communications equipment. The cables are often secured at the entry point(s) into the enclosures to maintain a certain arrangement, and in some cases, to provide added stability. Current securing mechanisms include cable glands, cable ties, sealing foams, or other structures that require additional tools for installation. Cable glands are expensive and require a high level of skill from installers. Alternatively, although cable ties are less expensive than cable glands, cable ties cause problems over time. Both cable glands and cable ties require the installer to measure the outer diameter of the cable being installed and then to use a properly sized cable gland or cable tie wrap, accordingly, which requires additional time and is sometimes difficult when space is limited.

Sealing foams are generally designed for a given and limited cable diameter causing challenges for installers if a wide range of outer diameters of cables are required in the equipment. This can result in an installer first measuring the outer diameter of the cable they want to install into the equipment, and then either (1) removing the corresponding amount of foam according to the measured diameter or (2) putting tape around the cable jacket to ensure no gap if there is a size mismatch between the outer diameter of the cable and the cutout of the foam.

Improvements in the foregoing are desired.

### SUMMARY

In general, the present disclosure relates to a sealing system that includes compressible members that are compressed onto cables to create a seal for a terminal where compressible member(s) compress independently of each other when cable(s) are inserted into the compressible member(s).

In one embodiment, an optical enclosure is provided. The optical enclosure comprising: a first compartment and a second compartment; a sealing system configured to be received in the first compartment and the second compartment, the sealing system comprising: a first compressible member comprising a first slit to receive a first cable; wherein the first compressible member is configured to be received in the first compartment; a second compressible member integrally formed with the first compressible member, the second compressible member comprising a second slit to receive a second cable; wherein the second compressible member is configured to be received in the second compartment; wherein the first compressible member and the second compressible member are configured so that when the first compressible member and the second compressible member are received in the first compartment and the second compartment, respectively, and the first cable is inserted into the first slit of the first compressible member, the first compressible member compresses independently of the second compressible member.

In another embodiment, the first compressible member and the second compressible member are configured so that when the first compressible member and the second compressible member are received in the first compartment and the second compartment, respectively, and the second cable is inserted into the second slit of the second compressible member, the second compressible member compresses independently of the first compressible member. In another embodiment, the first compartment has a width W1 and the first compressible member has a width W1A that is greater than the width W1 such that the first compressible member is configured to be compressed in width to be received in the first compartment; and the second compartment has a width W2 and the second compressible member has a width W1B that is greater than the width W2 such that the second compressible member is configured to be compressed in width to be received in the second compartment. In another embodiment, a width ratio of W1A:W1 ranges between about 1.1:1 to about 1.9:1. In another embodiment, a width ratio of W1B:W2 ranges between about 1.1:1 to about 1.9:1. In another embodiment, the first compressible member and the second compressible member have a density ranging between about 20 kg/m³ and about 40 kg/m³. In another embodiment, the first compressible member and the second compressible member have a density of about 35 kg/m³. In another embodiment, the first compressible member and the second compressible member each comprise a foam material. In another embodiment, the first slit comprises a single first cutout shaped to receive the first cable, and wherein the second slit includes a plurality of second cutouts each shaped to receive the second cable. In another embodiment, the single first cutout is circular and has a diameter ranging between about 0 mm and about 10 mm; and wherein the plurality of second cutouts each are circular and have a diameter ranging between about 0 mm and about 10 mm. In another embodiment, the optical enclosure further comprising a compression tool comprising a first prong and a second prong, wherein the first prong and the second prong are configured to be inserted into the first compressible member, and wherein the compression tool can be actuated to compress the first compressible member by the first prong and the second prong before the first compressible member is received in the first compartment. In another embodiment, the first compressible member and the second compressible member are configured to form a seal with the first cable and the second cable, respectively, when received in the first cutout and the second cutout within the first compartment and the second compartment, respectively, and further wherein the seal provides an ingress protection level of IP55.

In one embodiment, a method of sealing one or more cables within an enclosure that includes a first compartment, a second compartment, and a sealing system, wherein the sealing system includes a first compressible member and a second compressible member integrally formed with the first compressible member is provided. The method comprising: inserting a first cable into a first cutout of the first compressible member and a second cable into a second cutout of the second compressible member; coupling a compression tool to the first compressible member and the second compressible member; actuating the compression tool to compress the first compressible member and the second compressible member; inserting the compressed first compressible member and the compressed second compressible member into the first compartment and the second compartment respectively.

In another embodiment, the compression tool comprises a first prong, a second prong, a third prong, and a fourth prong; the first prong and the second prong are inserted into the first compressible member; and the third prong and the fourth prong are inserted into the second compressible member. In another embodiment, the first cable and the second cable are inserted into the first cutout and the second cutout, respectively, after the compressed first compressible member and the compressed second compressible member are inserted into the first compartment and the second compartment, respectively. In another embodiment, the first compressible member compresses independently of the second compressible member when inserting the first cable into the first cutout. In another embodiment, the second compressible member compresses independently of the first compressible member when inserting the second cable into the second cutout. In another embodiment, a width ratio of W1A:W1 ranges between about 1.1:1 to about 1.9:1. In another embodiment, a width ratio of W1B:W2 ranges between about 1.1:1 to about 1.9:1. In another embodiment, the first compressible member and the second compressible member have a density ranging between about 20 kg/m³ and about 40 kg/m³. In another embodiment, the first compressible member and the second compressible member have a density of about 35 kg/m³. In another embodiment, the first compressible member and the second compressible member each comprise a foam material. In another embodiment, the first slit comprises a single first cutout shaped to receive the first cable, and wherein the second slit includes a plurality of second cutouts each shaped to receive the second cable. In another embodiment, the single first cutout is circular and has a diameter ranging between about 0 mm and about 10 mm; and wherein the plurality of second cutouts each are circular and have a diameter ranging between about 0 mm and about 10 mm. In another embodiment, the first compressible member and the second compressible member are configured to form a seal with the first cable and the second cable, respectively, when received in the first cutout and the second cutout within the first compartment and the second compartment, respectively, and further wherein the seal provides an ingress protection level of IP55. In another embodiment, the compression tool comprises a plurality of prong pairs including a first prong pair, a second prong pair, a third prong pair, and a fourth prong pair; the first prong pair and the second prong pair are coupled to the first compressible member; and the third prong pair and the fourth prong pair are coupled to the second compressible member.

Additional features and advantages are set forth in the Detailed Description that follows, and in part will be readily apparent to those skilled in the art from the description or recognized by practicing the embodiments as described in the written description and claims hereof, as well as the appended drawings. It is to be understood that both the foregoing general description and the following Detailed Description are merely exemplary, and are intended to provide an overview or framework to understand the nature and character of the claims.

### BRIEF DESCRIPTION OF THE DRAWINGS

The accompanying drawings are included to provide a further understanding, and are incorporated in and constitute a part of this specification. The drawings illustrate one or more embodiment(s), and together with the Detailed Description serve to explain principles and operation of the various embodiments. As such, the disclosure will become more fully understood from the following Detailed Description, taken in conjunction with the accompanying Figures, in which:
FIG. 1 is a perspective view of a terminal in a closed position in accordance with the present disclosure;
FIG. 2 is a perspective view of the terminal of FIG. 1 in an open position in accordance with the present disclosure;
FIG. 3 is a perspective view of a portion of a sealing system for use in the terminal of FIG. 1 showing a first compressible member and a second compressible member in accordance with the present disclosure;
FIG. 4 is a front view of the portion of the sealing system of FIG. 3;
FIG. 5 is a front view of a portion of the second compressible member of FIG. 3 illustrating compression of the second compressible member in accordance with the present disclosure;
FIG. 6A is a perspective view of a compression tool in an uncompressed state that is used to compress the sealing system of FIG. 3 in accordance with the present disclosure;
FIG. 6B is a perspective view of the compression tool of FIG. 6A in a compressed state in accordance with the present disclosure;
FIGS. 7-10 illustrate a method of installing the sealing system of FIG. 3 within the terminal of FIG. 1 including cable installation;
FIG. 11A is a perspective view of an alternate compression tool in an uncompressed state that is used to compress the sealing system of FIG. 3 in accordance with the present disclosure;
FIG. 11B is a perspective view of the compression tool of FIG. 11A in a compressed state in accordance with the present disclosure; and
FIGS. 12-20 illustrate a method of installing the sealing system of FIG. 3 within the terminal of FIG. 1.

### DETAILED DESCRIPTION

Various embodiments will be clarified by examples in the description below. In general, the present disclosure relates to a sealing system that includes compressible members that are compressed onto cables to create a seal for a terminal where compressible members compress independently of each other when cable(s) are inserted into the compressible member(s).

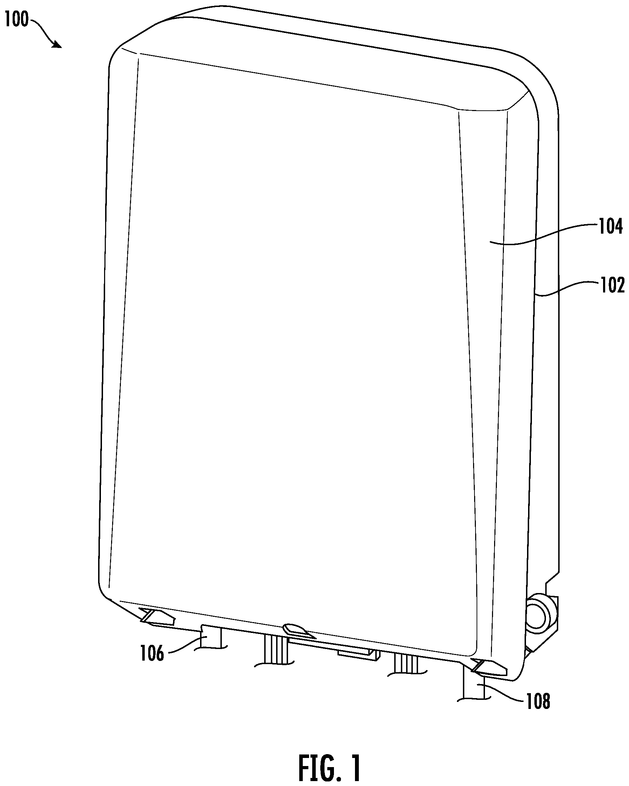

FIG. 1 illustrates an example enclosure 100, which may be installed within a communications architecture (e.g., on a building, other structure, or otherwise within a network). The enclosure 100 includes a back portion 102 and a cover 104, which in FIG. 1 is shown as being in a closed position. The enclosure 100 also includes an inlet feeder cable 106 that enters the enclosure 100 at a first location (e.g., on the left) and an outlet feeder cable 108 that exits the enclosure 100 at a second location (e.g., on the right). It should be appreciated that, in other embodiments, the inlet feeder cable 106 and/or the outlet feeder cable 108 may enter or exit the enclosure 100 at any other location, and further, in some embodiments, the inlet feeder cable 106 and/or the outlet feeder cable 108 may enter and exit at a same location.

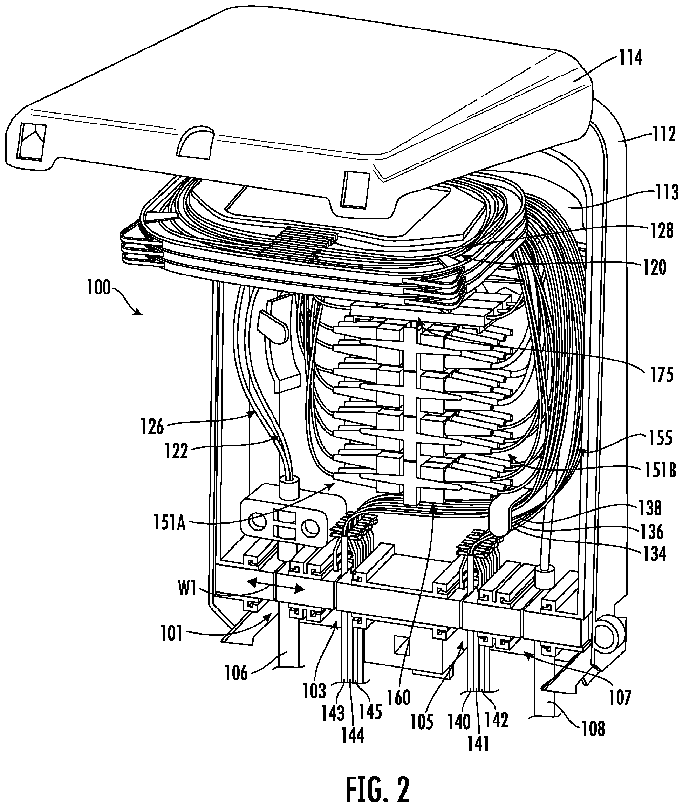

Referring now to FIG. 2, FIG. 2 illustrates enclosure 100, which may also be installed within a communications architecture (e.g., on a building, other structure, or otherwise within a network) in an open position. Enclosure 100 defines a first compartment 101, a second compartment 103, a third compartment 105, and a fourth compartment 107. Some of the compartments shown are configured to receive an inlet feeder cable 106, while others are configured to receive the outlet feeder cable 108 or other optical fiber cables (e.g., cables 140, 141, 144) depending on the application. While four (4) compartments are shown in FIG. 2, it is within the scope of the present disclosure that an alternate number of compartments may be used within enclosure 100 depending on the application. As mentioned previously, enclosure 100 includes an inlet feeder cable 106 that enters the enclosure 100 at a first location (e.g., on the left through a first compartment 101) and an outlet feeder cable 108 that exits the enclosure 100 at a second location (e.g., on the right through a fourth compartment 107). As described above, it should be appreciated that, in other embodiments, the inlet feeder cable 106 and/or the outlet feeder cable 108 may enter or exit the enclosure 100 at any other location, and further, in some embodiments, the inlet feeder cable 106 and/or the outlet feeder cable 108 may enter and exit at a same location.

Within the enclosure 100 is a base structure 113 that is configured with a plurality of splice tray attachment features (not shown) configured to optionally receive one or more splice trays 120. Some or all of the one or more splice trays 120 may include splice features such as splice features 128 that are configured to enable splicing of fibers when routed therethrough. In addition, the enclosure 100 further includes a splitter 175 within base structure 100 as shown.

After the input feeder cable 106 is routed into the base structure 113 through the first compartment 101, the input feeder cable 106 may comprise one or more cables and/or fibers. In the embodiment shown in FIG. 2 and for illustrative purposes, the input feeder cable 106 comprises at least a first cable and/or fiber 122 and a second cable and/or fiber 126. The first cable and/or fiber 122 may be routed through base structure 113 and into splice tray 120 where the first cable and/or fiber 122 is spliced with one of the optical fibers and connectorized to form connector pigtail(s) 151B that are routed within base structure 113 into patch panel 160. The second cable and/or fiber 126 may be routed through base 113 into splice tray 120 where the second cable and/or fiber 126 is splice with one of the input fibers of splitter 175. The spliced fiber(s) is/are routed through base 113 into a splitter 175 (as an input fiber of splitter 175) where output fibers 177 of splitter 175 are then connectorized to form pigtail(s) 151B that are then routed within base 113 into patch panel 160.

While the above description describes input cables and/or fibers being spliced in splice tray 120 and then patched into patch panel 160 or spliced in splice tray 120 and then split in splitter 175 and then patched into patch panel 160, it is within the scope of the present disclosure that alternate combinations of splicing, splitting, and patching may occur on input cables and/or fibers within enclosure 100 (e.g., splice-split-splice, patch-split-patch, splice-patch-split-patch, or splice-patch-split-patch-splice, etc.).

As shown in FIG. 2, output cables 140-145 enter through enclosure 100 via second compartment 103 and third compartment 105. In the embodiment shown in FIG. 2 and for illustrative purposes, the output cables 140-145 include output fibers 155 are routed through base structure 113 and into splice tray 120 where the output fibers 155 are spliced with optical fibers of the connector pigtail(s) 151A that are routed within base structure 113 into patch panel 160.

In some embodiments, the cable and/or fiber 122 or 126 may be fed into splice tray 120 where the cable and/or fiber 122, 126 are spliced with optical fibers of output cable 108. In this way, the cable and/or fiber 122, 126 is configured to continue into another enclosure as another input feeder cable (e.g., via output feeder cable 108).

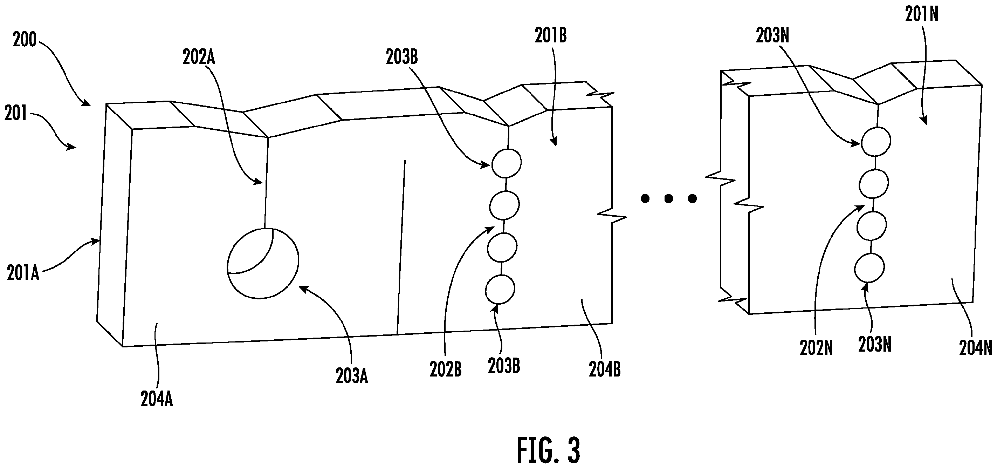

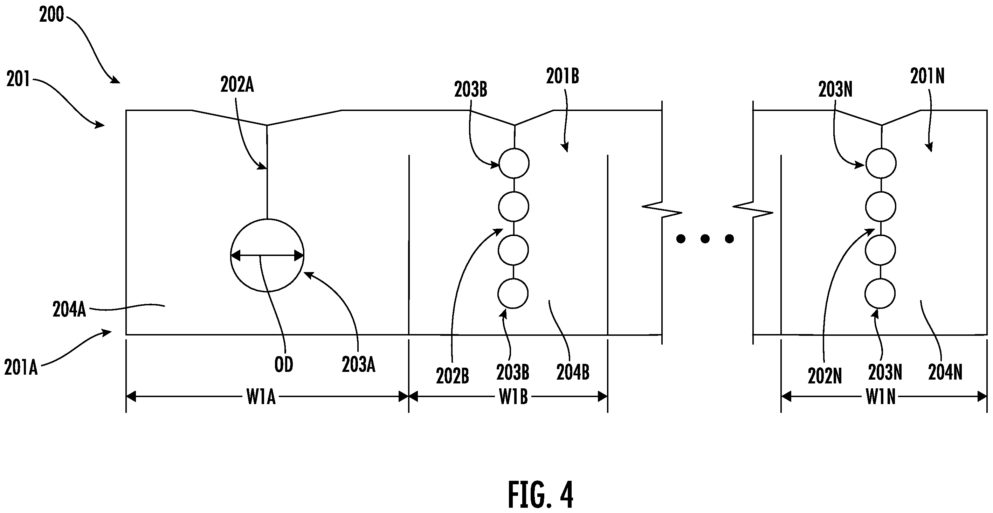

Referring now to FIGS. 3 and 4, a sealing system 200 for sealing one or more cables is shown. Sealing system 200 comprises a plurality of compressible members 201. As shown in FIGS. 3 and 4, a first compressible member 201A and a second compressible member 201B that is coupled to the first compressible member 201A are shown. In some embodiments, second compressible member 201B is integrally formed with the first compressible member 201A. First compressible member 201A and second compressible member 201B are configured to be compressible and inserted into the first compartment 101 and the second compartment 103 of enclosure 100 and to provide sealing to optical fiber cables or optical fibers that are inserted through first compressible member 201A and second compressible member 201B as discussed in greater detail herein. While two compressible members 201A, 201B are shown, it is within the scope of the present disclosure that additional compressible members 201 may be added to the first compressible member 201A and the second compressible member 201B depending on the number of compartments in enclosure 100 as illustrated in FIG. 3.

Referring first to the first compressible member 201A, first compressible member 201A is made of a material 204A. In some embodiments, material 204A is a compressible material such as foam. However, it is within the scope of the present disclosure that alternate suitable materials may be used. In some embodiments, material 204A has a density ranging between about 20 kg/m³ and about 40 kg/m³ or between about 35 kg/m³ and about 39 kg/m³. In some embodiments, material 204A has a density of about 35 kg/m³. First compressible member 201A comprises a width W1A that ranges between about 20 mm and about 40 mm. In some embodiments, width W1A is about 37mm. First compressible member 201A comprises a first slit 202A configured to receive an optical fiber cable or an optical fiber. As shown, first slit 202A comprises at least one first cutout 203A. In some embodiments, first cutout 203A comprises a single cutout within first slit 202A. However, it is within the scope of the present disclosure that first cutout 203A comprises multiple cutouts within first slit 202A. First cutout 203A has a diameter OD1 ranging between about 0 mm and about 10 mm. In some embodiments, first cutout 203A has a diameter OD1 of about 5 mm. As mentioned previously, the compartments 101, 103 of the enclosure 100 have a width W1. Using the first compressible member 201A as an example, in some embodiments, a width ratio W1A:W1 of the width W1A of the first compressible member 201A and the width W1 of the first compartment 101 ranges between about 1.1:1 and about 1.9:1. In some embodiments, the width ratio W1A:W1 is about 1.30:1. While the width ratio is discussed between the first compartment 101 and the first compressible member 201A, it is within the scope of the present disclosure that the width ratio ranges discussed above can be applied to the other compressible members 201 of the sealing system 200 and the corresponding compartments of the enclosure 100 (e.g., a width ratio W1B:W2 of the width W1B of the second compressible member 201B and the width W2 of the second compartment 103, etc.).

Referring now to the second compressible member 201B, second compressible member 201B is made of a material 204B. In some embodiments, material 204B is a compressible material such as foam. However, it is within the scope of the present disclosure that alternate suitable materials may be used. In some embodiments, material 204B has a density ranging between about 20 kg/m³ and about 40 kg/m³ or between about 35 kg/m³ and about 39 kg/m³. In some embodiments, material 204B has a density of about 35 kg/m³. In some embodiments, second compressible member 201B has the same density as first compressible member 201A. Second compressible member 201B comprises a width W1B that ranges between about 20 mm and about 40 mm. In some embodiments, width W1B is about 29 mm. In some embodiments, width W1B is the same as width W1A; however, it is within the scope of the present disclosure that widths W1A, W1B are different. Like first compressible member 201A, second compressible member 201B comprises a second slit 202B configured to receive an optical fiber cable or an optical fiber. As shown, second slit 202B comprises a plurality of second cutouts 203B. In some embodiments, the plurality of second cutouts 203B comprises four (4) cutouts within the second slit 202B. However, it is within the scope of the present disclosure that first cutout 203A comprises any number of cutouts within second slit 202B. Each of the plurality of second cutouts 203B has a diameter OD2 ranging between about 0 mm and about 8 mm. In some embodiments, each of the plurality of second cutout 203B have a diameter OD2 of about 5 mm. While the first and second cutouts 203A, 203B are shown as circular cutouts, it is within the scope of the present disclosure that the cutouts 203A, 203B can have alternate suitable shapes such as a semi-circle or the like.

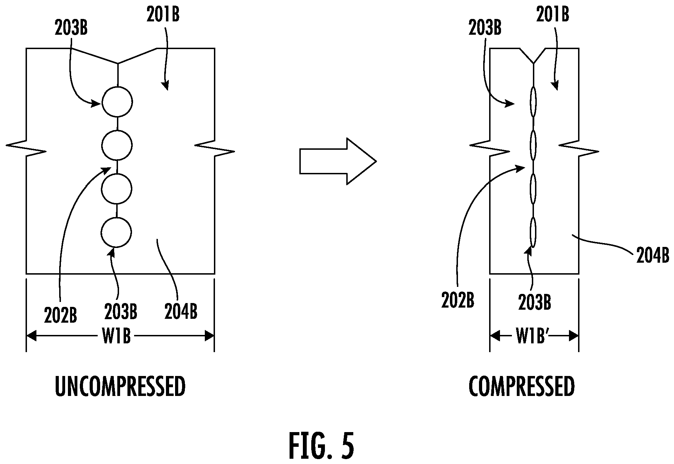

When inserting compressible members within the first compartment 101 or second compartment 103 of enclosure 100, the compressible members are compressed such that the width of the compressible members can fit into the width of the housing within enclosure 100. In particular, and with reference to FIG. 5, second compressible member 201B is shown in an uncompressed state and a compressed state. Prior to inserting the second compressible member 201B in the second compartment 103 of enclosure 100, the second compressible member 201B is compressed such that the width W1B of the second compressible member 203B is reduced to a compressed width of W1B' as shown. In some embodiments, the compressed width W1B' ranges between about 10 mm and about 30 mm. In some embodiments, the compressed width W1B' is about 20 mm. In some embodiments, the second compressible member 203B has a width of about 29 mm in an uncompressed state and a width of about 20 mm in a compressed state. In the compressed state, the plurality of second cutouts 203B are compressed such that the outer diameter of the plurality of second cutouts 203B is reduced, and the plurality of second cutouts 203B are compressed into second slit 202B. The compression of the plurality of the second cutouts 203B enables a seal around the inserted optical fiber cable or optical fiber as discussed herein.

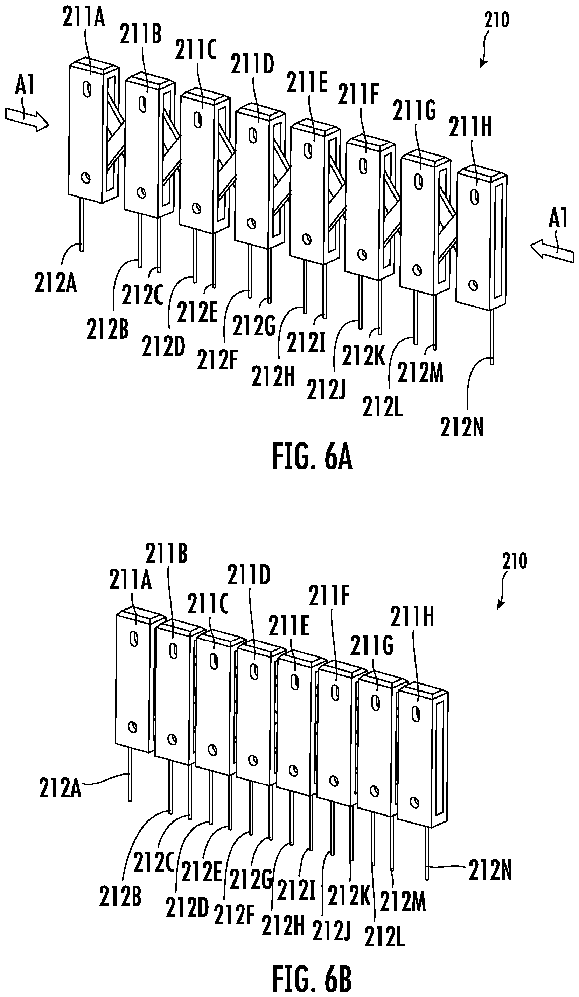

In some embodiments and as shown in FIGS. 6A and 6B, a compression tool 210 may be used to compress the second compressible member 203B prior to insertion into the second compartment 103 of enclosure 100. As shown, compression tool 210 comprises a plurality of handles 211A-211H with a plurality of prongs 212A-212N that are configured to be inserted into compressible members 201 and compress the compressible members 201 when the compression tool 210 is compressed as discussed in greater detail herein. The plurality of prongs 212A-212N are coupled to each other in a compressible arrangement where the compression tool 210 can transition between an uncompressed state as shown in FIG. 6A and a compressed state shown in FIG. 6B when a force is applied onto compression tool 210 along direction A1 such that the plurality of handles 211A-211H and the plurality of prongs 212A-212N are closer to each other as compared to the uncompressed state. While a compression tool 210 is discussed above, it is within the scope of the present disclosure that alternate suitable methods of compressing second compressible member 203B such as by hand, for example. While the above disclosure is referring to second compressible member 203B, it is within the scope of the present disclosure that the above description is applicable to first compressible member 203A or any other compressible member 203 within sealing system 200.

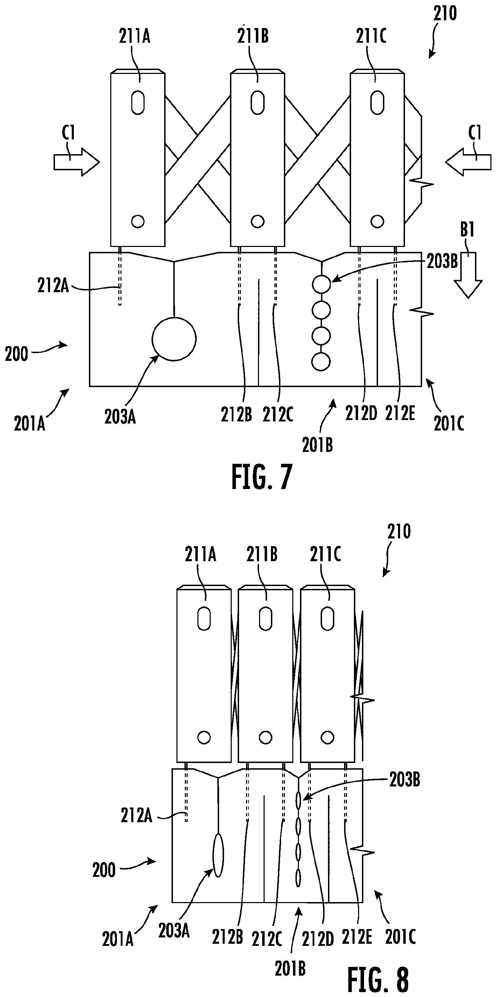

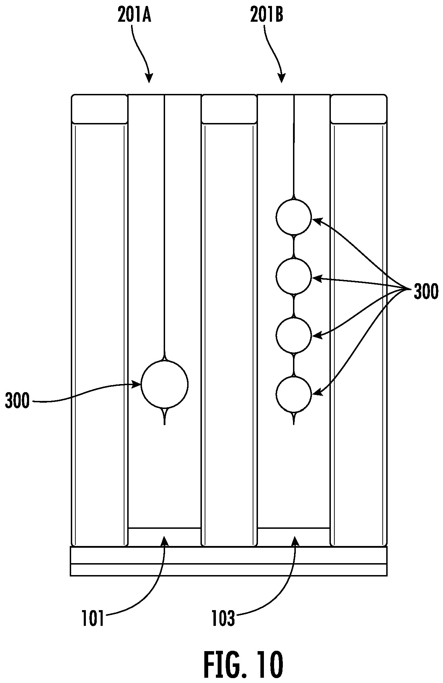

Referring now to FIGS. 7-10, a method for inserting the sealing system 200 into the first compartment 101 and the second compartment 103 of enclosure 100 is shown. FIGS. 7-10 and the disclosure below describe the method of inserting the first compressible member 201A and second compressible member 201B into the enclosure 100. However, it is within the scope of the present disclosure that the method as discussed herein can be applied to any number of compressible members 201.

First, compression tool 210 is inserted into the first compressible member 201A and the second compressible member 201B to couple the compression tool 210 to the compressible members 201. In particular, a first prong 212A of the first handle 211A and a second prong 212B of second handle 211B are inserted into the first compressible member 201A, and a third prong 212C of second handle 211B and a fourth prong 211D of third handle 211C are inserted into the second compressible member 201B along direction B1 as shown in FIG. 7. Then, as shown, a force is applied onto compression tool 210 along direction C1 to move compression tool 210 into a compressed state and thereby compress the first compressible member 201A and the second compressible member 201B as shown in FIG. 8.

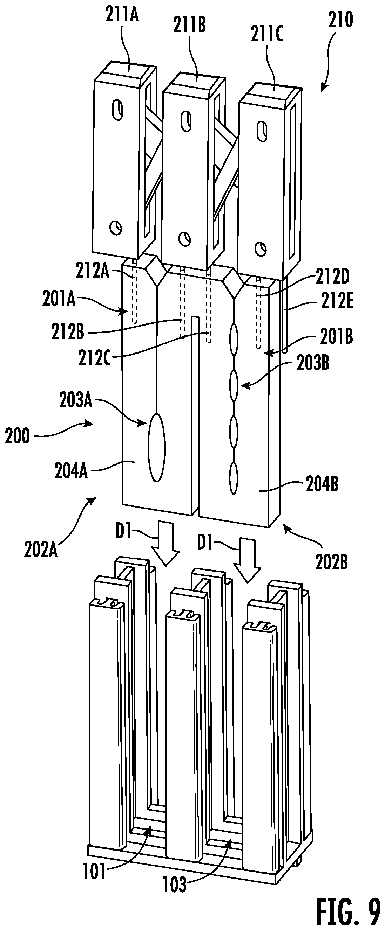

Then, as shown in FIG. 9, the compressed first compressible member 201A and the compressed second compressible members 201A, 201B are inserted into the first compartment 101 and the second compartment 103 of enclosure 100, respectively, along direction D1. When the compressed first and second compressible members 201A, 201B are inserted into the first compartment 101 and the second compartment 103 of enclosure 100, respectively, the first compressible member 201A and the second compressible member 201B undergo additional compression due to the width of the first and second compartments 101, 103. The additional compression that the first compressible member 201A undergoes when inserted into the first compartment 101 is independent of the additional compression that the second compressible member 201B undergoes when inserted into the second compartment 103 due to the presence of the corresponding cutouts along with the width differences between the compartments 101, 103 and the compressible members 201A, 201B. After insertion into the compartments 101, 103, compression tool 210 is removed from compressible members 201.

Then, an optical fiber cable(s) 300 is/are inserted into the compressed cutout(s) 203A, 203B of the compressed, inserted first compressible member 201A and the second compressible member 201B. When the optical fiber cable(s) 300 are inserted into the cutouts 203A, 203B, the compression of the compressible members 201A, 201B provide a sealing force onto the optical fiber cables, thereby providing a seal around the cable to prevent external debris (e.g., dust, water, etc.) from damaging the optical fiber cable 300 or entering enclosure 100. In some embodiments, the sealing provided by the first compressible member 201A and the second compressible member 201B onto optical fiber cable(s) 300 is at an ingress protection level of IP55.

Also, when optical fiber cable(s) 300 are inserted into the compressed cutout(s) 203A, 203B, the corresponding peripheral area around the cutouts 203A, 203B within first compressible member 201A and second compressible member 201B are compressed. In this embodiment, the subsequent compression of the first compressible member 201A and the second compressible member 201B due to the insertion of optical fiber cable(s) 300 occur independently of each other. That is, when an optical fiber cable 300 is inserted into cutout 203A of the first compressible member 201A, first compressible member 201A undergoes additional compression without additional compression occurring in the other compressible members 201 (e.g., second compressible member 201B). Similarly, when an optical fiber cable 300 is inserted into one of the cutouts 203B of the second compressible member 201B, there is additional compression of the second compressible member 201B without additional compression of first compressible member 201A or other compressible members 201 regardless of whether an optical fiber cable 300 has previously been inserted into the other compressible members 201.

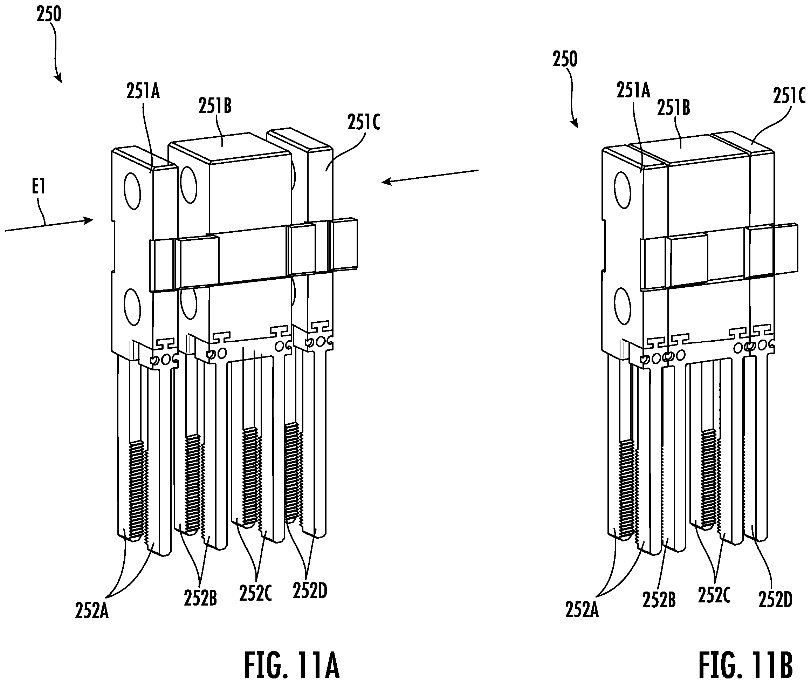

Referring now to FIGS. 11A and 11B, an alternate compression tool 250 is shown. Similar to compression tool 210, compression tool 250 may be used to compress the compressible members 201 prior to insertion into enclosure 100. As shown, compression tool 250 comprises a plurality of handles 251A-251C with a plurality of prong pairs 252A-252C that are configured to be coupled to compressible members 201 and compress the compressible members 201 when the compression tool 250 is compressed as discussed in greater detail herein. The plurality of prong pairs 252A-252D are coupled to each other in a compressible arrangement where the compression tool 250 can transition between an uncompressed state as shown in FIG. 11A and a compressed state shown in FIG. 11B when a force is applied onto compression tool 250 along direction E1 such that the plurality of handles 251A-251C and the plurality of prongs 252A-252D are closer to each other as compared to the uncompressed state. While a compression tool 250 is discussed above, it is within the scope of the present disclosure that alternate suitable methods of compressing compressible members 201 such as by hand, for example.

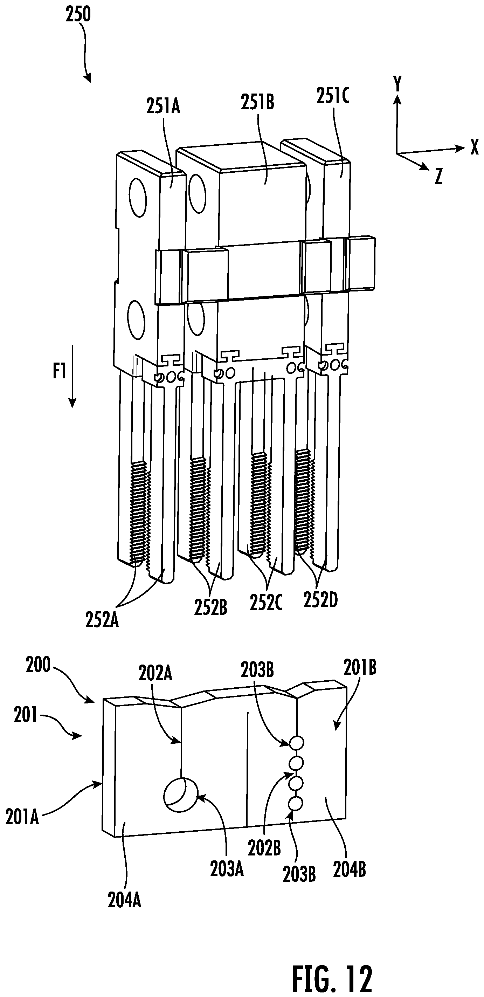

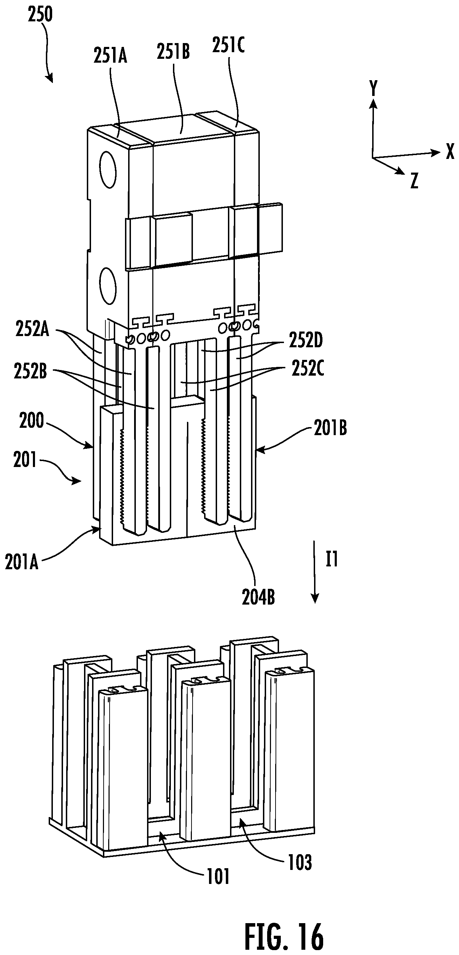

Referring now to FIGS. 12-19, a method for inserting the sealing system 200 into the first compartment 101 and the second compartment 103 of enclosure 100 is shown. FIGS. 12-19 and the disclosure below describe the method of inserting the first compressible member 201A and second compressible member 201B into the enclosure 100. However, it is within the scope of the present disclosure that the method as discussed herein can be applied to any number of compressible members 201.

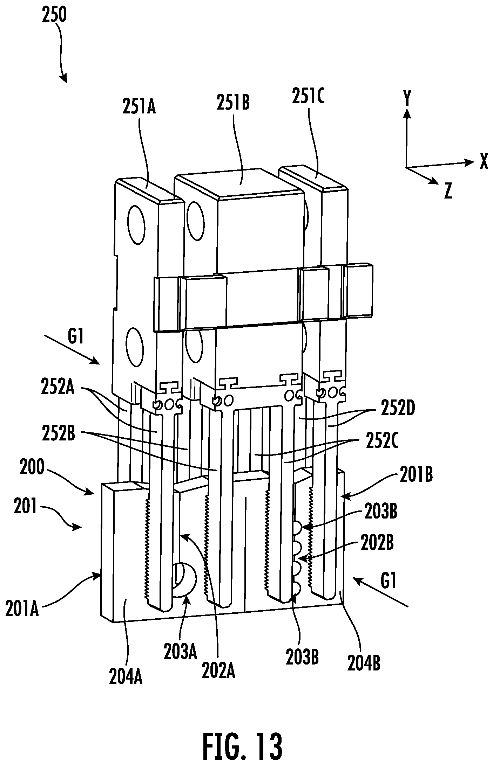

First, compression tool 250 is coupled to the first compressible member 201A and the second compressible member 201B. In particular, a first prong pair 252A of the first handle 251A and a second prong 252B of second handle 251B are coupled to the first compressible member 201A, and a third prong pair 252C of second handle 251B and a fourth prong pair 251D of third handle 251C are coupled to the second compressible member 201B. To couple the prong pairs to the compressible members, compression tool 250 is moved along direction F1 as shown in FIG. 12 such that the first compressible member 201A is positioned between the prong pairs 252A, 252B and the second compressible member 201B is positioned between prong pairs 252C, 252D. Then, as shown, a force is applied onto compression tool 210 along direction G1 (in the z direction of the Cartesian coordinate system shown) to move compression tool 250 into a compressed state and thereby compress the first compressible member 201A and the second compressible member 201B as shown in FIG. 13.

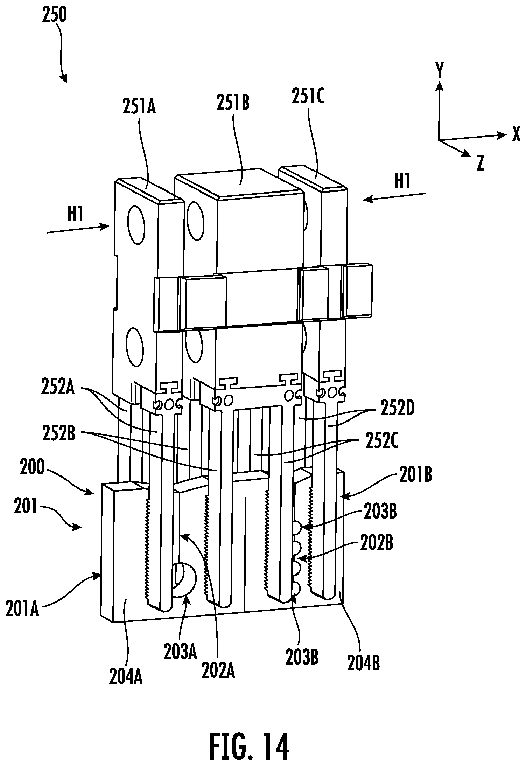

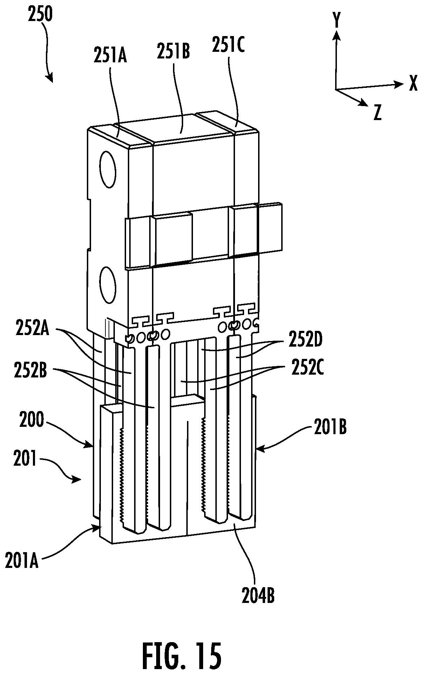

Then, as shown in FIG. 14, the compressed first compressible member 201A and the compressed second compressible members 201B are compressed along direction H1 to compress the first compressible member 201A and the second compressible member 201B to reduce the widths of the first compressible member 201A and the second compressible member 201B as shown in FIG. 15.

Then, compression tool 250 and the compressed first compressible member 201A and the compressed second compressible member 201B are inserted into the first compartment 101 and the second compartment 103 of enclosure 100, respectively, along direction I1.

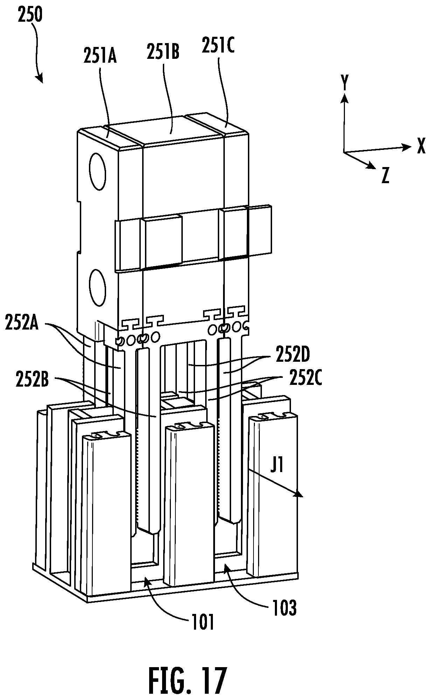

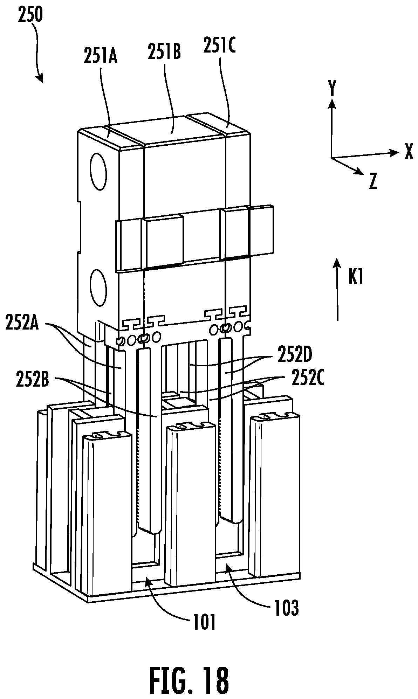

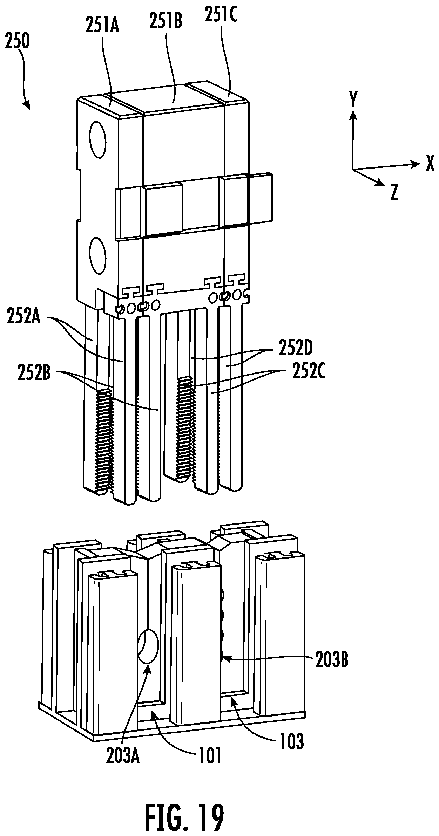

Referring now to FIGS. 17 and 18, compression tool 250 is removed from the compressible members 201A, 201B by decoupling the compression tool 250 from the compressible members 201A, 201B along direction J1, and then, removing compression tool 250 along direction K1 resulting in the configuration shown in FIG. 19.

When the compressed first and second compressible members 201A, 201B are inserted into the first compartment 101 and the second compartment 103 of enclosure 100, respectively, the first compressible member 201A and the second compressible member 201B undergo additional compression due to the width of the first and second compartments 101, 103. The additional compression that the first compressible member 201A undergoes when inserted into the first compartment 101 is independent of the additional compression that the second compressible member 201B undergoes when inserted into the second compartment 103 due to the presence of the corresponding cutouts along with the width differences between the compartments 101, 103 and the compressible members 201A, 201B. After insertion into the compartments 101, 103, compression tool 210 is removed from compressible members 201.

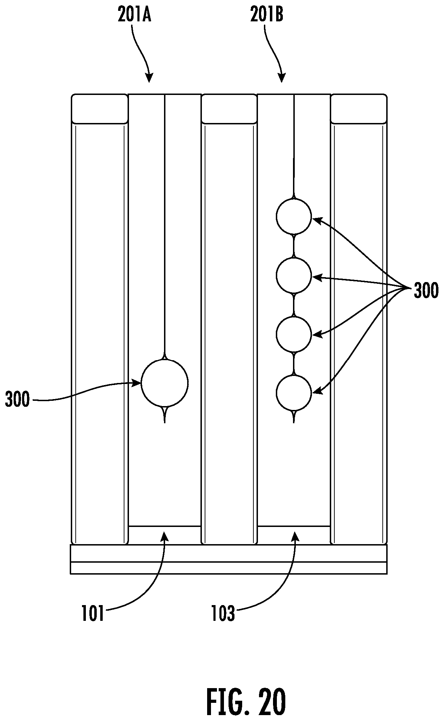

Then, an optical fiber cable(s) 300 is/are inserted into the compressed cutout(s) 203A, 203B of the compressed, inserted first compressible member 201A and the second compressible member 201B as shown in FIG. 20. When the optical fiber cable(s) 300 are inserted into the cutouts 203A, 203B, the compression of the compressible members 201A, 201B provide a sealing force onto the optical fiber cables, thereby providing a seal around the cable to prevent external debris (e.g., dust, water, etc.) from damaging the optical fiber cable 300 or entering enclosure 100. In some embodiments, the sealing provided by the first compressible member 201A and the second compressible member 201B onto optical fiber cable(s) 300 is at an ingress protection level of IP55.

Also, when optical fiber cable(s) 300 are inserted into the compressed cutout(s) 203A, 203B, the corresponding peripheral area around the cutouts 203A, 203B within first compressible member 201A and second compressible member 201B are compressed. In this embodiment, the subsequent compression of the first compressible member 201A and the second compressible member 201B due to the insertion of optical fiber cable(s) 300 occur independently of each other. That is, when an optical fiber cable 300 is inserted into cutout 203A of the first compressible member 201A, first compressible member 201A undergoes additional compression without additional compression occurring in the other compressible members 201 (e.g., second compressible member 201B). Similarly, when an optical fiber cable 300 is inserted into one of the cutouts 203B of the second compressible member 201B, there is additional compression of the second compressible member 201B without additional compression of first compressible member 201A or other compressible members 201 regardless of whether an optical fiber cable 300 has previously been inserted into the other compressible members 201.

It will be apparent to those skilled in the art that various modifications to the preferred embodiments of the disclosure as described herein can be made without departing from the spirit or scope of the disclosure as defined in the appended claims.

Thus, the disclosure covers the modifications and variations provided they come within the scope of the appended claims and the equivalents thereto.

## Claims

1. An optical enclosure comprising:
a first compartment and a second compartment;
a sealing system configured to be received in the first compartment and the second compartment, the sealing system comprising:
a first compressible member comprising a first slit to receive a first cable;
wherein the first compressible member is configured to be received in the first compartment;
a second compressible member integrally formed with the first compressible member, the second compressible member comprising a second slit to receive a second cable;
wherein the second compressible member is configured to be received in the second compartment;
wherein the first compressible member and the second compressible member are configured so that when the first compressible member and the second compressible member are received in the first compartment and the second compartment, respectively, and the first cable is inserted into the first slit of the first compressible member, the first compressible member compresses independently of the second compressible member.

2. The optical enclosure of claim 1, wherein the first compressible member and the second compressible member are configured so that when the first compressible member and the second compressible member are received in the first compartment and the second compartment, respectively, and the second cable is inserted into the second slit of the second compressible member, the second compressible member compresses independently of the first compressible member.

3. The optical enclosure of claim 1 or claim 2, wherein:
the first compartment has a width W1 and the first compressible member has a width W1A that is greater than the width W1 such that the first compressible member is configured to be compressed in width to be received in the first compartment; and
the second compartment has a width W2 and the second compressible member has a width W1B that is greater than the width W2 such that the second compressible member is configured to be compressed in width to be received in the second compartment.

4. The optical enclosure of claim 3, wherein a width ratio of W1A:W1 ranges between about 1.1:1 to about 1.9:1.

5. The optical enclosure of claim 3 or claim 4, wherein a width ratio of W1B:W2 ranges between about 1.1:1 to about 1.9:1.

6. The optical enclosure of claim 1 or claim 4, wherein the first compressible member and the second compressible member have a density ranging between about 20 kg/m³ and about 40 kg/m³.

7. The optical enclosure of claim 6, wherein the first compressible member and the second compressible member have a density of about 35 kg/m³.

8. The optical enclosure of any of claims 1-7, wherein the first compressible member and the second compressible member each comprise a foam material.

9. The optical enclosure of any of claims 1-7, wherein the first slit comprises a single first cutout shaped to receive the first cable, and wherein the second slit includes a plurality of second cutouts each shaped to receive the second cable.

10. The optical enclosure of claim 9, wherein the single first cutout is circular and has a diameter ranging between about 0 mm and about 10 mm; and
wherein the plurality of second cutouts each are circular and have a diameter ranging between about 0 mm and about 10 mm.

11. The optical enclosure of any of claims 1-10, further comprising a compression tool comprising a first prong and a second prong, wherein the first prong and the second prong are configured to be inserted into the first compressible member, and wherein the compression tool can be actuated to compress the first compressible member by the first prong and the second prong before the first compressible member is received in the first compartment.

12. The optical enclosure of any of claims 1-11, wherein the first compressible member and the second compressible member are configured to form a seal with the first cable and the second cable, respectively, when received in the first cutout and the second cutout within the first compartment and the second compartment, respectively, and further wherein the seal provides an ingress protection level of IP55.
